# EUROPEAN PATENT APPLICATION

(11) **EP 4 786 171 A1**
(43) Date of publication of application: **05.08.2026**
(21) Application number: 25382061.7
(22) Date of filing: 31.01.2025
(51) Int. Cl.: B32B 27/08, B32B 27/30, B32B 27/32

(54) **MULTILAYER FILMS**

(71) Applicant: DOW GLOBAL TECHNOLOGIES LLC, Midland, Michigan 48674 (US)
(72) Inventor: EVANGELIO ARAUJO, Laura, 43006 Tarragona (ES); HILL, Martin Keith, 43006 Tarragona (ES)
(74) Representative: Boult Wade Tennant LLP

(57) **Abstract**

A multilayer film is disclosed herein. The film comprises one or more primary layers, a heat seal skin layer and an ethylene copolymer layer. The ethylene copolymer layer is directly adjacent to the heat seal skin layer and is between the primary layers and the heat seal skin layer. The ethylene copolymer layer comprises an ethylene copolymer selected from the group consisting of an ethylene acrylate copolymer and an ethylene vinyl acetate copolymer. Pouches made using multilayer films with the ethylene copolymer layer can exhibit improved drop resistance.

## Description

### FIELD

Embodiments described herein generally relate to multilayer films and packaging made from the films.

### INTRODUCTION

Multilayer polymer films are commonly used to make pouches for packaging food and other products. A common process makes pouches from multilayer polymer films that comprise a skin layer of heat seal polymer, by the following steps: 1. A film is unrolled off a roll and proceeds in a machine direction. 2. The film is folded to bring the outside edges together with heat seal layers in contact with each other, and the edges are welded together with heat and pressure to form a hollow tube with the heat seal layer on the inside of the tube. The front end of the tube is open. 3. A heated set of jaws pinch the tube transverse to the machine direction at a point upstream from the front end of the tube, to form a seal transverse to the machine direction. This forms a pouch with an open end at the front of the tube. After this step, the pouch can be cut from the tube upstream from the transverse seal and recovered for later use. Cutting forms a new open end at the front of the tube so that step 3 can be performed again. Alternatively, the tube can be weakened upstream from the transverse seal so that the pouch can be torn off at a later time. The tube can then be rolled, and pouches can be torn off as needed. Tearing off each pouch opens a new open end at the end of the roll. Alternatively, a form, fill and seal process may further comprise the following additional steps: 1. The pouch is filled with product from the open end. 2. A heated set of jaws pinch the open end of the pouch with heat and pressure transverse to the machine direction, to form a second seal transverse to the machine direction, with the product trapped in a pouch between the two seals. 3. The closed pouch is cut from the end of the tube. Form, fill and seal systems can be vertical (VFFS) or horizontal (HFFS).

Multilayer films used to make pouches for packaging face many performance demands. The pouches should be strong enough to resist tearing and puncturing, even when they are dropped. The pouches should be flexible enough to withstand transportation and handling without rupturing, but in some cases, they also have enough stiffness to stand open on their own without collapsing. The pouches often need a good appearance, with low haze and medium gloss. Multilayer films can be optimized to meet these demands by adjusting the composition and proportions of layers within the film. For example, core layers of polyethylene can give the film physical strength, tear resistance, and puncture resistance, while a skin layer of heat seal polymer can form strong heat seals. For large pouches (especially pouches for liquids), the multilayer polyethylene film often has a layer of biaxially oriented polyethylene terephthalate (BOPET) film laminated onto the film. The BOPET strengthens the pouch against rupturing when dropped, and it may stiffen the pouch to stand open on its own. However, laminates that contain BOPET are considered non-recyclable under the 2024 RecyClass standards published by Plastics Recyclers Europe because the BOPET layer can contaminate a polyethylene recycling stream. It is desired to improve the dart drop performance and other properties of polyethylene pouches.

### SUMMARY

Disclosed herein is a multilayer film. The multilayer film comprises: (a) one or more primary layers comprising at least one polyethylene layer; (b) an ethylene copolymer layer comprising an ethylene copolymer selected from the group consisting of an ethylene acrylate copolymer and an ethylene vinyl acetate copolymer; and (c) a heat seal skin layer having a melting temperature of no more than 130°C; wherein the one or more primary layers are at least 50% of the thickness of the multilayer film, based on the total thickness of the film; and the ethylene copolymer layer is directly adjected to the heat seal skin layer and is positioned between the heat seal skin layer and the one or more primary layers.

Disclosed herein is also a pouch. The pouch comprises a multilayer film according to embodiments disclosed herein.

Also disclosed herein is a process to make a pouch. The process comprises the steps of: (a) forming a multilayer polymer film into a tube with an open end at the front, and (b) transversely heat sealing the tube upstream from the open end to form a pouch with an open end, wherein the multilayer film is a multilayer film according to embodiments disclosed herein. Also disclosed herein is a process to make a pouch comprising the steps of: (a) folding a multilayer film, which comprises a heat seal skin layer, so that one folded layer lies on top of the other folded layer with the heat seal skin layers of each folded layer against each other; and (b) heat sealing the folded film transverse to the fold at regular intervals to form a pouch in which the folded side forms a bottom of the pouch, the transverse heat seals form sides of the pouch, and the side opposite the fold remains at least partially open and forms an open top on the pouch, wherein (and characterized in that) the multilayer polymer film is a multilayer polymer film of this invention.

### BRIEF DESCRIPTION OF THE DRAWINGS

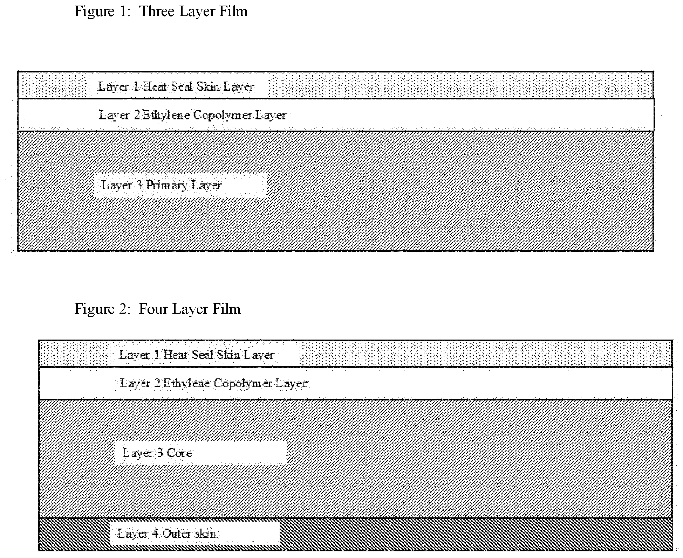

Figures 1, 2 and 3 respectively illustrate three-layer, four-layer and nine-layer films.

### DETAILED DESCRIPTION

### Definitions:

"Core layer" means a layer of a multilayer film that is inside the film, rather than a skin layer. For example, a multilayer film consisting of three layers has one core layer (e.g., A/B/C, where B is the core layer).

"Ethylene-based plastomer" means ethylene/α-olefin interpolymers which (i) comprise units derived from ethylene monomer and units derived from at least one C3-C10 α-olefin comonomer, or at least one C4-C8 α-olefin comonomer, or at least one C6-C8 α-olefin comonomer; and (ii) have a density from 0.865 g/cc, or 0.870 g/cc or 0.880 g/ cc, or 0.890 g/ cc to 0.900 g/ cc, or 0.902 g/ cc, or 0.904 g/ cc, or 0.909 g/ cc, or 0.910 g/ cc. This includes substantially linear, or linear, ethylene/α-olefin copolymers containing homogeneous short-chain branching distribution and ethylene/α-olefin multiblock copolymers. Nonlimiting examples of ethylene-based plastomers include AFFINITY^{™} Polyolefin Plastomers (available from The Dow Chemical Company), EXACT^{™} plastomers (available from ExxonMobil Chemical), Tafiner (available from Mitsui), Nexlene^{™} (available from SK Chemicals Co.), and Lucene^{™} (available LG Chem Ltd.).

"High density polyethylene" ("HDPE") means substantially linear, or linear, polyethylene homopolymers or ethylene/α-olefin interpolymers which (i) comprise units derived from ethylene monomer and optionally units derived from at least one C₃-C₁₀ α-olefin comonomer; and (ii) have a density from 0.930 g/cc to 0.980 g/cc. Non-limiting examples of HDPE are sold under the DOW^{™} trademark.

"Linear low density polyethylene" ("LLDPE") means substantially linear, or linear, ethylene/α-olefin interpolymers containing homogeneous short-chain branching distribution which (i) comprise units derived from ethylene monomer and units derived from at least one *C₃-C₁₀* α-olefin comonomer; and (ii) have a density from 0.910 g/cc to 0.930 g/cc. Non-limiting examples of LLDPE are sold under the DOWLEX^{™} and ELITE^{™} trademarks.

"Low density polyethylene" ("LDPE") means "high pressure ethylene polymer" or "highly branched polyethylene" and is defined to mean that the polyethylene is partly or entirely homopolymerized or copolymerized in autoclave or tubular reactors at pressures above 14,500 psi (100 MPa) with the use of free-radical initiators, such as peroxides (see for example US 4,599,392, which is hereby incorporated by reference). LDPE has a density in the range of 0.910 to 0.940 g/cm³. Non-limiting examples of LDPE are sold under the DOW^{™} trademark.

"Polyethylene" means polyethylene homopolymers or ethylene/α-olefin interpolymers that comprise more than 50 weight percent (wt.%) repeating units derived from ethylene monomer. The term polyethylene includes HDPE, LDPE, LLDPE and ethylene-based plastomers.

"Polyethylene layer" means a layer of a multilayer film that comprises at least 50 weight percent (wt%) polyethylene.

"Polymer" means a compound prepared by polymerizing monomers, whether of the same or a different type. The generic term polymer thus embraces the term homopolymer (employed to refer to polymers prepared from only one type of monomer), and the term copolymer or interpolymer. Trace amounts of impurities (for example, catalyst residues) may be incorporated into and/or within the polymer. A polymer may be a single polymer, a polymer blend, or a polymer mixture, including mixtures of polymers that are formed *in situ* during polymerization.

"Polyolefin" means polyethylene or polypropylene.

"Skin layer" means a layer of a multilayer film that is positioned on a face of the film or surface. For example, a multilayer film consisting of three layer has two skin layers and a core layer (e.g., A/B/C, where A and C are skin layers).

"Ethylene copolymer layer" means a layer of a multilayer film that is directly adjacent to a heat seal skin layer. "Directly adjacent" means the layers are next to and in physical contact with each other. For example, a multilayer film comprising four layers, A/B/C/D, where A and B are directly adjacent to each other.

A "primary layer" means a layer of a multilayer film that is not an ethylene copolymer layer or a heat seal skin layer.

"Upstream" means, with respect to a polymer film moving in a packaging process, the direction opposite the movement of the film.

"Downstream" means, with respect to a polymer film moving in a packaging process, the direction that the film moves.

### Multilayer Films

Multilayer films disclosed herein comprise one or more primary layers, an ethylene copolymer layer, and a heat seal skin layer. The ethylene copolymer layer is between and directly adjacent to both a heat seal skin layer and a primary layer.

In some embodiments, the multilayer film has a thickness of at least 30 microns or at least 50 microns or at least 70 microns or at least 90 microns or at least 100 microns or at least 120 microns or at least 140 microns or at least 150 microns. In some embodiments, the multilayer film has a thickness of at most 300 microns or at most 270 microns or at most 250 microns or at most 220 microns or at most 200 microns or at most 180 microns or at most 160 microns or at most 150 microns.

The one or more primary layers are (collectively) at least 50 percent of the thickness of the multilayer film, based on the total thickness of the film. In some embodiments, the one or more primary layers are at least 55 percent of the thickness of the multilayer film, based on the total thickness of the film, or at least 60 percent or at least 65 percent or at least 70 percent or at least 75 percent or at least 80 percent. In some embodiments, the one or more primary layers are at most 92 percent of the thickness of the multilayer film, based on the total thickness of the film, or at most 90 percent or at most 88 percent or at most 85 percent or at most 82 percent or at most 80 percent.

In some embodiments, the multilayer film comprises only a single primary layer (i.e., one primary layer), and the multilayer film is a three-layer film (i.e., a film consisting of a heat seal skin layer, an ethylene copolymer layer, and a primary layer). Figure 1 illustrates a three-layer film that comprises a single primary layer, in addition to the ethylene copolymer and heat seal skin layer. (The thickness of layers is not to scale in Figure 1).

In some embodiments, the one or more primary layers comprise at least one core layer, which is directly adjacent to the ethylene copolymer layer, and an outer-skin layer directly adjacent to a core layer on the face opposite the ethylene copolymer layer and the heat seal skin layer. Figure 2 illustrates a four-layer film that comprises a single core layer and an outer-skin layer, in addition to the ethylene copolymer and heat seal skin layer. (The thickness of layers is not to scale in Figure 2).

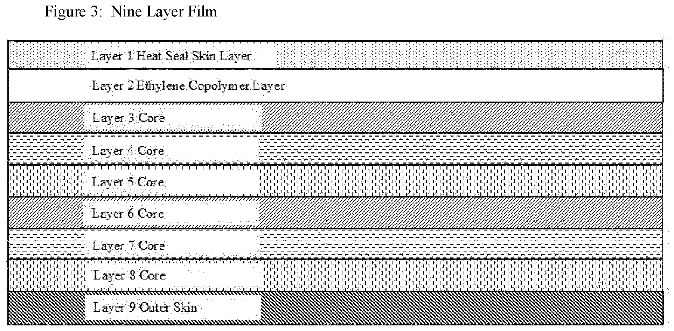

In some embodiments, the one or more primary layers comprise two or more core layers, wherein one core layer is directly adjacent to the ethylene copolymer layer, and an outer-skin layer is directly adjacent a core layer on the face opposite the ethylene copolymer layer and the heat seal skin layer. There is no maximum limit on the number of primary layers or core layers, although it may be technically difficult and not useful to manufacture a multilayer film with more than 25 layers. In some embodiments, the core layers comprise no more than 20 layers or no more than 18 layers or no more than 15 layers or no more than 12 layers or no more than 10 layers or no more than 9 layers or no more than 8 layers or no more than 7 layers or no more than 6 layers or no more than 5 layers. In some embodiments, the core layers comprise at least 1 layer, or at least 2 layers, or at least 3 layers. Figure 3 illustrates a nine-layer film that comprises six core layers and an outer-skin layer, in addition to the ethylene copolymer and heat seal skin layer. (The thickness of layers is not to scale in Figure 3). The six core layers and outer-skin layer in Figure 3 are primary layers.

Polymers in the one or more primary layers are selected to provide the desired properties to the film. For example, the one or more primary layers may be selected to provide physical strength, such as impact resistance, puncture resistance and tear resistance. The one or more primary layers may be selected to provide desired rigidity, which can be measured by 2% secant modulus. The one or more primary layers may be selected to provide a barrier to the passage of air, moisture and/or flavor components. The one or more primary layers may be tie layers. An outer skin layer may be selected to provide desired gloss on the outside of the package.

The one or more primary layers comprise at least one polyethylene layer. A polyethylene layer comprises at least 50 weight percent (wt.%) polyethylene. Examples of polyethylene include high density polyethylene (HDPE), linear low density polyethylene (LLDPE), and low density polyethylene (LDPE). In some embodiments, the at least one polyethylene layer comprises high density polyethylene. In some embodiments, the at least one polyethylene layer comprises linear low density polyethylene.

In some embodiments, polyethylene layers comprise at least 60 wt.% polyethylene (excluding additives) or at least 70 wt.% or at least 80 wt.% or at least 90 wt.% or at least 95 wt.% or up to 100 wt.%. In some embodiments, polyethylene layers are at least 50 percent of the thickness of the film, based on the total thickness of the film, or at least 60 percent or at least 65 percent or at least 70 percent or at least 75 percent or at least 80 percent. In some embodiments, all primary layers in the multilayer film are polyethylene layers.

In some embodiments, the one or more primary layers comprise a barrier polymer, such as ethylene-vinyl alcohol (EVOH) or a polyamide such as nylon.

In some embodiments, one or more primary layers are tie layers. Examples of tie layers that bind polyolefin layers to non-polyolefin layers include polyolefins that have been functionalized with pendant polar moieties, such as pendant acid or anhydride moieties. For example, copolymers of ethylene with maleic acid and optionally acrylate monomers are sometimes used as tie layers. Suitable tie layer polymers are known and commercially available, such as under the AMPLIFY^{™} and BYNEL^{™} trademarks. In some embodiments, the tie layer comprises a polymer blend, such as a blend of polyolefin and a functionalized polyolefin. In some embodiments, tie layers are used between a polyethylene layer and a polymer layer that comprises polar moieties, such as the barrier polymers named above. In some embodiments, tie layers are used between a polyethylene layer and a polypropylene layer.

In some embodiments, one or more primary layers consist essentially of a single polymer. In some embodiments, one or more primary layers comprise a polymer blend that comprises two or more polymers. It is known how to select compatible polymers for polymer blends, or how to add compatibilizer to make blends from otherwise incompatible polymers. Examples of common polymer blends include blends of polyolefins, such as blending HDPE or LLDPE with LDPE or with ethylene-based plastomers.

In some embodiments, one or more adjacent primary layers comprise identical polymers. The separation between identical layers is often difficult to discern, and identical layers can be treated as a single thicker layer.

The multilayer film comprises an ethylene copolymer layer between the primary layers and the heat seal skin layer. The ethylene copolymer layer comprises an ethylene copolymer selected from the group consisting of an ethylene acrylate copolymer or an ethylene vinyl acetate copolymer. In some embodiments, the ethylene copolymer layer is at least 3 percent of the thickness of the multilayer film, based on the total thickness of the film, or at least 4 percent or at least 5 percent. In some embodiments, the ethylene copolymer layer is at most 10 percent of the thickness of the multilayer film, based on the total thickness of the film, or at most 9 percent or at most 8 percent or at most 7 percent or at most 6 percent or at most 5 percent.

Ethylene acrylate copolymers are random copolymers of ethylene monomer and acrylate monomer. In some embodiments, the acrylate monomer is an alkyl ester of acrylic acid. In some embodiments, the acrylate monomer is an alkyl esters of methacrylic acid. Alkyl moieties in alkyl esters of acrylic acid or alkyl esters of methacrylic acid comprise on average at least 1 carbon atom, and in some embodiments comprise on average at least 2 carbon atoms or at least 3 carbon atoms or at least 4 carbon atoms. In some embodiments, alkyl moieties in alkyl esters of acrylic acid or alkyl esters of methacrylic acid comprise on average at most 12 carbon atoms or at most 10 carbon atoms or at most 8 carbon atoms or at most 6 carbon atoms or at most 5 carbon atoms or at most 4 carbon atoms. Examples of alkyl moieties in alkyl esters of acrylic acid or alkyl esters of methacrylic acid include methyl, ethyl, n-propyl, isopropyl, n-butyl, isobutyl and t-butyl moieties. Some examples of acrylic monomers are methyl acrylate, ethyl acrylate, butyl acrylate and 2-ethylhexyl acrylate. Some examples of acrylic monomers are methyl methacrylate and ethyl methacrylate. In some embodiments, the acrylate monomer is selected from methyl acrylate, ethyl acrylate, propyl acrylate or butyl acrylate. In some embodiments, the acrylate monomer is ethyl acrylate.

In some embodiments, the ethylene acrylate copolymer comprises at least 8 wt% acrylate monomer or at least 10 wt% or at least 12 wt% or at least 14 wt% or at least 16 wt% or at least 18 wt% or at least 22 wt% or at least 25 wt% or at least 27 wt%. In some embodiments, the ethylene acrylate copolymer comprises at most 30 wt% acrylate monomer or at most 28 wt% or at most 25 wt% or at most 22 wt% or at most 20 wt% or at most 18 wt%. In some embodiments, the ethylene acrylate copolymer comprises at least 70 wt% ethylene monomer or at least 75 wt% or at least 78 wt% or at least 80 wt% or at least 82 wt%. In some embodiments, the ethylene acrylate copolymer comprises at most 90 wt% ethylene monomer or at most 88 wt% or at most 86 wt% or at most 84 wt% or at most 83 wt%. (For clarity, the statement that a polymer "comprises" a monomer means that repeating units in the polymer are derived from that monomer. It does not suggest that the polymer contains unreacted monomer.)

In some embodiments, the density of the ethylene acrylate copolymer is at least 0.914 g/cc or at least 0.916 g/cc or at least 0.918 g/cc or at least 0.920 g/cc or at least 0.922 g/cc or at least 0.924 g/cc. In some embodiments, the density of the ethylene acrylate copolymer is at most 0.950 g/cc or at most 0.945 g/cc or at most 0.940 g/cc or at most 0.935 g/cc or at most 0.932 g/cc or at most 0.930 g/cc or at most 0.928 g/cc or at most 0.926 g/cc or at most 0.924 g/cc.

In some embodiments, the melt index (I2) of the ethylene acrylate copolymer is at least 0.5 g/10 min or at least 0.8 g/10 min or at least 1.0 g/10 min or at least 1.2 g/10 min or at least 1.4 g/10 min or at least 1.5 g/10 min. In some embodiments, the melt index (I2) of the ethylene acrylate copolymer is at most 8.0 g/10 min or at most 5.0 g/10 min or at most 4.0 g/10 min or at most 3.0 g/10 min or at most 2.0 g/10 min or at most 1.8 g/10 min or at most 1.6 g/10 min.

In some embodiments, the melting temperature of the ethylene acrylate copolymer is at least 85°C or at least 88°C or at least 90°C or at least 92°C or at least 94°C or at least 96°C or at least 98°C. In some embodiments, the melting temperature of the ethylene acrylate copolymer is at most 120°C or at most 110°C or at most 105°C or at most 102°C or at most 100°C.

Suitable ethylene acrylate copolymers are commercially available under ELVALOY^{™} trademark. Other ethylene acrylate copolymers can be made by free-radical copolymerization of ethylene monomer and acrylate monomer according to known processes.

Ethylene vinyl acetate copolymers are random copolymers of ethylene monomer and vinyl acetate monomer.

In some embodiments, the ethylene vinyl acetate copolymer comprises at least 10 wt% vinyl acetate monomer or at least 12 wt% or at least 15 wt% or at least 18 wt% or at least 20 wt%. In some embodiments, the ethylene vinyl acetate copolymer comprises at most 50 wt% vinyl acetate monomer or at most 40 wt% or at most 35 wt% or at most 30 wt%. In some embodiments, the ethylene vinyl acetate copolymer comprises at least 50 wt% ethylene monomer or at least 60 wt% or at least 65 wt% or at least 70 wt%. In some embodiments, the ethylene vinyl acetate copolymer comprises at most 90 wt% ethylene monomer or at most 88 wt% or at most 85 wt% or at most 82 wt% or at most 80 wt%.

In some embodiments, the density of the ethylene vinyl acetate copolymer is at least 0.935 g/cc or at least 0.940 g/cc or at least 0.942 g/cc or at least 0.944 g/cc or at least 0.946 g/cc or at least 0.948 g/cc. In some embodiments, the density of the ethylene vinyl acetate copolymer is at most 0.960 g/cc or at most 0.958 g/cc or at most 0.956 g/cc or at most 0.954 g/cc or at most 0.952 g/cc or at most 0.950 g/cc.

In some embodiments, the melt index (I2) of the ethylene vinyl acetate copolymer is at least 1.0 g/10 min or at least 1.5 g/10 min or at least 1.8 g/10 min or at least 2.0 g/10 min or at least 2.2 g/10 min or at least 2.5 g/10 min. In some embodiments, the melt index (I2) of the ethylene vinyl acetate copolymer is at most 15 g/10 min or at most 10 g/10 min or at most 8.0 g/10 min or at most 5.0 g/10 min or at most 4.0 g/10 min or at most 3.0 g/10 min.

Suitable ethylene vinyl acetate copolymers are commercially available under ELVAX^{™} trademark. Other ethylene vinyl acetate copolymers can be made by free-radical copolymerization of ethylene monomer and vinyl acetate monomer in a solvent according to known processes.

In some embodiments, the ethylene copolymer layer comprises at least 50 wt% ethylene acrylate copolymer, based on the total weight of the ethylene copolymer layer, or at least 60 wt% or at least 70 wt% or at least 80 wt% or at least 90 wt% or at least 95 wt% or up to 100 wt%. In some embodiments, the ethylene copolymer layer comprises at least 50 wt% ethylene vinyl acetate copolymer, based on the total weight of the ethylene copolymer layer, or at least 60 wt% or at least 70 wt% or at least 80 wt% or at least 90 wt% or at least 95 wt% or up to 100 wt%. In some embodiments, the ethylene copolymer layer comprises no more than 50 wt% polymers other than ethylene acrylate copolymer and ethylene vinyl acetate copolymer, based on the total weight of the ethylene copolymer layer, or no more than 40 wt% or no more than 30 wt% or no more than 20 wt% or no more than 10 wt% or as low as 0 wt%.

The multilayer film comprises a heat seal skin layer directly adjacent to the ethylene copolymer layer. It forms a surface layer for the film. In some embodiments, the heat seal skin layer is at least 5 percent of the thickness of the film, based on the total thickness of the film, or at least 8 percent or at least 10 percent or at least 12 percent or at least 14 percent or at least 15 percent. In some embodiments, the heat seal skin layer is at most 30 percent of the thickness of the film, based on the total thickness of the film, or at most 25 percent or at most 22 percent or at most 20 percent or at most 18 percent or at most 16 percent. A "heat seal skin layer" is a skin layer having a melting temperature of no more than 130°C. A "heat seal polymer" is a polymer having a melting temperature of no more than 130°C.

The heat seal skin layer can comprise heat seal polymers. The heat seal polymers can soften and adhere to each other under heat seal conditions in the processes to make and use pouches. In some embodiments, the heat seal polymers comprise LLDPE or an ethylene-based plastomer. In some embodiments, the heat seal polymers comprise at least 50 wt% of LLDPE or an ethylene-based plastomer, based on the total weight of the heat seal layer, or at least 60 wt% or at least 70 wt% or at least 80 wt% or at least 90 wt% or up to 60 wt%. In some embodiments, the heat seal polymers comprise HDPE. In some embodiments, the heat seal polymers comprise at least 50 wt% of HDPE, based on the total weight of the heat seal layer, or at least 60 wt% or at least 70 wt% or at least 80 wt% or at least 90 wt% or up to 60 wt%. In some embodiments, the heat seal polymers comprise polypropylene. In some embodiments, the heat seal polymers comprise at least 50 wt% of polypropylene, based on the total weight of the heat seal layer, or at least 60 wt% or at least 70 wt% or at least 80 wt% or at least 90 wt% or up to 60 wt%.

Heat seal polymer have a melting temperature of no more than 130°C. In some embodiments, the heat seal polymer has a melting temperature of at least 80°C or at least 85°C or at least 90°C or at least 95°C or at least 100°C. In some embodiments, the heat seal polymer has a melting temperature of no more than 125°C or no more than 120°C or no more than 110°C or no more than 105°C.

In some embodiments, the density of LLDPE or ethylene-based plastomer heat seal polymer is at least 0.880 g/cc or at least 0.885 g/cc or at least 0.890 g/cc or at least 0.895 g/cc or at least 0.900 g/cc. In some embodiments, the density is at most 0.930 g/cc or at most 0.920 g/cc or at most 0.910 g/cc or at most 0.905 g/cc.

In some embodiments, the melt index (I2) of LLDPE or ethylene-based plastomer heat seal polymer is at least 0.2 g/10 min or at least 0.5 g/10 min or at least 0.7 g/10 min or at least 1 g/10 min. In some embodiments, the melt index (I2) is at most 10 g/10 min or at most 5 g/10 min or at most 3 g/10 min or at most 2 g/10 min.

In some embodiments, the heat seal polymer has a seal initiation temperature of at least 70°C or at least 75°C or at least 80°C or at least 85°C or at least 90 °C or at least 95°C. In some embodiments, the heat seal polymer has a seal initiation temperature of at most 130°C or at most 120°C or at most 110°C or at most 105°C. In some cases, polyethylene polymers made with metallocene catalysts or other single site catalysts can offer lower seal initiation temperatures than similar polymers made using Ziegler-Natta catalysts.

Examples of suitable heat seal polymers are commercially available under the AFFINITY^{™}, ELITE^{™} and DOWLEX^{™} trademarks.

In some embodiments, one or more layers in the multilayer film comprises additives. Common additives in multilayer films include plasticizers, flame retardants, antioxidants, acid scavengers, light and heat stabilizers, lubricants, pigments, antistatic agents, slip agents, antiblock additives and thermal stabilizers. In some embodiments, skin layers comprise slip agents or antiblock additives or both. In some embodiments, additives are no more than 5 wt% of a polymer layer, based on the total weight of the polymer layer, or no more than 4 wt% or no more than 3 wt% or no more than 2 wt% or no more than 1 wt%. In some embodiments, additives are essentially 0 wt% of the polymer layer, based on the total weight of the polymer layer.

### Co-Extrusion and Multilayer Film:

The polymers described above may be coextruded by known processes using commerciallyavailable equipment to make the multilayer film. Polymers and additives for each layer are melted in separate extruders. The molten materials are fed to an extrusion die. The die is designed to extrude each material as one or more discrete and continuous layers in a multilayer film.

In a cast film extrusion, the die is a slot die. The film is extruded and drawn across an air gap, which can uniaxially stretch the film. Then the film is contacted with a chill roll, quenched, and wound onto a roll.

In a blown film extrusion, the die is a circular die that extrudes a tube of film. A gas bubble (such as air or nitrogen) is trapped inside the tubular film between the die and a pair of downstream nip rollers. The film passes over the gas bubble and is biaxially stretched before it solidifies. The film is cooled, slit, flattened and wound into a roll.

The extrusion temperature for each layer is selected to maintain the molten polymer at a desired viscosity without substantially decomposing the polymer. In some embodiments, the extrusion temperature for polyethylene polymers and ethylene-based plastomers is at least 170°C or at least 180°C or at 190°C or at least 200°C or at least 210°C. In some embodiments, the extrusion temperature for polyethylene polymers and ethylene-based plastomers is at most 240°C or at most 230°C or at most 225°C or at most 220°C.

In some embodiments, the blow-up ratio of a blown film is at least 2.0:1 or at least 2.3:1 or at least 2.5:1. In some embodiments, the blow-up ratio of a blown film is at most 5: 1 or at most 4:1 or at most 3:1 or at most 2.5:1.

Some extrusion equipment may have difficulty co-extruding a thin ethylene copolymer layer alongside skin and primary layers that are more than 3 or 4 times thicker. In some embodiments, this difficulty can be reduced by extruding the thicker layers as two or more thin layers that comprise the same polymer composition. The identical layers are typically indistinguishable after the film solidifies and can be treated as a single thicker layer.

In an embodiment, a multilayer film is extruded that comprises all necessary layers except for the outer skin layer, and the outer skin layer is laminated onto the extruded multilayer film. The laminated outer skin layer can be printed as desired before it is added to the multilayer film. The printed face can be protected on the inside of the multilayer film and can be seen through the laminated outer skin layer.

It is known to select different layers of the film and their thickness to provide a desired level of structural strength and appearance.

In some embodiments, the dart drop strength of the multilayer film is at least 500 g or at least 600 g or at least 700 g or at least 800 g or at least 900 g or at least 1000 g or at least 1200 g or at least 1400 g or at least 1600 g or at least 1800 g or at least 2000 g. In some embodiments, the dart drop strength is no more than 5000 g or 4000 g or 3000 g.

In some embodiments, the machine direction Elmendorf Tear Strength of the multilayer film is at least 600 g or at least 800 g or at least 1000 g or at least 1200 g or at least 1600 g or at least 1800 g. In some embodiments, the machine direction Elmendorf Tear Strength is no more than 5000 g or 4000 g or 3000 g or 2000 g.

In some embodiments, the transverse direction Elmendorf Tear Strength of the multilayer film is at least 600 g or at least 800 g or at least 1000 g or at least 1200 g or at least 1600 g or at least 1800 g or at least 2000 g or at least 2200 g or at least 2400 g or at least 2600 g. In some embodiments, the transverse direction Elmendorf Tear Strength is no more than 5000 g or 4000 g or 3000 g or 2000 g.

In some embodiments, the puncture energy of the multilayer film is at least 4.0 J or at least 4.5 J or at least 5.0 J or at least 5.5 J or at least 6.0 J. In some embodiments, the puncture energy of the multilayer film is no more than 10 J or no more than 9 J or no more than 8 J.

In some embodiments, the 2% secant modulus of the multilayer film in the machine direction and/or the transverse direction is at least 100 MPa or at least 150 MPa or at least 200 MPa or at least 220 MPa or at least 240 MPa or at least 260 MPa or at least 280 MPa or at least 300 MPa. In some embodiments, the 2% secant modulus the multilayer film in the machine direction and/or the transverse direction is at most 500 MPa or at most 400 MPa.

In some embodiments, the multilayer film has a haze of no more than 60 percent or no more than 55 percent or no more than 50 percent or no more than 45 percent. There is no minimum desired haze, but in some embodiments haze less than 20% or 30% is unnecessary.

In some embodiments, the multilayer film comprises at least 70 wt% polyethylene or at least 75 wt% polyethylene or at least 80 wt% polyethylene or at least 85 wt% or at least 88 wt% or at least 90 wt% or at least 92 wt% or at least 95 wt%. In some embodiments, the multilayer film comprises at most 97 wt% polyethylene or at most 96 wt% or at most 95 wt%.

In some embodiments, the multilayer film comprises at least 70 wt% polyethylene, and the heat seal layer comprises polyolefin. In some embodiments, the multilayer film is classified as Limited Compatibility for recycling under the 2024 RecyClass standards published by Plastics Recyclers Europe. In some embodiments, the multilayer film comprises at least 90 wt% polyethylene, and the heat seal layer comprises polyethylene or ethylene-based plastomer. In some embodiments, the multilayer film comprises at least 95 wt% polyethylene, and the heat seal layer comprises polyethylene or ethylene-based plastomer. In some embodiments, the multilayer film is classified as Full Compatibility for recycling under the 2024 RecyClass standards published by Plastics Recyclers Europe.

Some embodiments of the multilayer film are illustrated in Figures 1, 2 and 3.

Figure 1 shows a three layer film. Layer 1 is the heat seal skin layer. Layer 1 comprises heat seal polymer as previously described. Layer 2 is the ethylene copolymer layer, directly beneath the heat seal skin layer. It comprises an ethylene copolymer selected from an ethylene acrylate polymer and an ethylene vinyl acetate polymer as previously described. Layer 3 is a primary layer, as previously described and is also a second skin layer. Layer 3 is a polyethylene layer and is at least 50% of the thickness of the film, based on the total thickness of the film. (Thicknesses are not to scale.)

Figure 2 shows a four layer film. Layer 1 is the heat seal skin layer. Layer 1 comprises heat seal polymer as previously described. Layer 2 is the ethylene copolymer layer, directly beneath the heat seal skin layer. It comprises an ethylene copolymer selected from an ethylene acrylate polymer and an ethylene vinyl acetate polymer as previously described. Layer 3 is a core layer, as previously described. Layer 4 is an outer skin layer as previously described. Together, Layers 3 and 4 are primary layers that comprise at least one polyethylene layer and are at least 50% of the thickness of the film, based on the total thickness of the film. (Thicknesses are not to scale.)

Figure 3 shows a nine layer film. Layer 1 is the heat seal skin layer. Layer 1 comprises heat seal polymer as previously described. Layer 2 is the ethylene copolymer layer, directly beneath the heat seal skin layer. It comprises ethylene acrylate polymer or ethylene vinyl acetate polymer as previously described. Layers 3-8 are core layers, as previously described. Layer 9 is an outer skin layer as previously described. Together, Layers 3-9 are primary layers that comprise at least one polyethylene layer and are at least 50% of the thickness of the film, based on the total thickness of the film.

### (Thicknesses are not to scale.)

### Use of the Film

The multilayer films of this invention may be used in any application that requires a heat seal film.

An exemplary use for the multilayer film is to form a pouch by the steps of: (a) forming the multilayer polymer film into a tube, and (b) transversely heat sealing the tube upstream from the open end of the tube, to form a pouch with an open end.

The multilayer film can be formed into a tube (step (a)) by (i) folding the film along the long (machine) direction of the film to form a tube with the heat seal skin layer on the inside of the tube and the heat seal layers at the edges of the film in contact with each other and (ii) pressing the edges of the film together with heat to seal the tube closed. Alternatively, the tube can be formed by layering two films together with their heat seal skin layers in contact, and pressing the edges of the films together with heat to seal both edges and form a tube. In either case, the resulting tube has the heat seal skin layer lining the inside of the tube. The width of the tube will be approximately the width of the resulting pouch.

The transverse seal can be formed (step (b)) by pressing the tube together with heat upstream from the open end of the tube and transversely to the long (machine) dimension, to form a heat seal that closes the tube. The transverse heat seal forms a pouch in which the open end of the tube becomes the open end of the pouch, and the heat seal becomes the closed end of the pouch.

Both steps are well known and commonly practiced, and equipment to perform them is known. The strength of heat seals varies depending on the temperature and pressure used to form the heat seals and the time that the temperature and pressure are maintained.

The temperatures used to form seals in both steps are above the heat seal initiation temperature of the heat seal layer, but typically below the temperature that melts the primary layers. In some embodiments, the temperature is maintained in the higher portion of this range to allow greater line speed. In some embodiments, the sealing temperature is at least 100°C or at least 105°C or at least 110°C of at least 115°C or at least 120°C. In some embodiments, the temperature is at most 150°C or at most 145°C or at most 140°C of at most 135°C or at most 130°C.

The pressure used to form heat seals varies depending on the sealing equipment. In some embodiments, the sealing pressure is at least 100 KPa or at least 150 KPa or at least 200 KPa. In some embodiments, the sealing pressure is at most 1000 KPa or at most 750 KPa or at most 500 KPa.

In some embodiments, the residence time during which pressure and temperature are maintained to form heat seals is kept as short as necessary to achieve the desired seal strength; short residence times can permit more efficient operation of the sealing equipment. In some embodiments, residence time is at least 0.1 sec or at least 0.2 sec or at least 0.3 sec or at least 0.4 sec or at least 0.5 sec. In some embodiments, the residence time is at most 3 sec or at most 2 sec or at most 1 sec or at most 0.8 sec or at most 0.5 sec. In some embodiments, heat and pressure in step (a) are maintained longer than heat and pressure in step (b), so that the temperature in step (a) may be lower than in step (b).

In some embodiments, the seal strength is at least 22 N/15 mm or at least 24 N/15 mm or at least 26 N/15 mm or at least 28 N/15 mm or at least 30 N/15 mm or at least 32 N/15 mm. In some embodiments, the seal strength is at most 55 N/15 mm or at most 50 N/15 mm or at most 45 N/15 mm or at most 42 N/15 mm or at most 40 N/15 mm or at most 38 N/15 mm.

The upstream distance from the open end of the tube to the transverse seal is approximately the length of the pouch and varies depending on the desired length of the pouch. In some small pouches, such as candy wrappers, the distance may be from 4 cm to 8 cm or even less. For medium pouches, the distance may be from 8 cm to 20 cm. For large pouches, the distance may be from 20 to 100 cm. For very large pouches, the distance may be from 100 cm to 200 cm or more.

Likewise, the width of the tube varies depending on the desired width of the pouch. In some small pouches, the width of the tube may be from 3 cm to 6 cm or even less. For medium pouches, the width of the tube may be from 6 cm to 20 cm. For large pouches, the width of the tube may be from 20 to 100 cm. For very large pouches, the width of the tube may be from 100 cm to 200 cm or more.

In some embodiments, after step (b), the pouch is cut from the tube upstream from the transverse heat seal and recovered, to be filled and closed later (steps (c) and (d)). The cut forms a new open end of the tube, and step (b) can be repeated to make another pouch.

Alternatively, in some embodiments, the tube is weakened upstream from the transverse heat seal, such as by partial cutting, so that the pouch can be torn off of the tube later. The process of sealing and weakening the tube is performed at regular intervals down the tube. The tube is rolled for storage, transportation and use. As each pouch is torn off the tube, it forms a new open end for the next pouch in line.

Alternatively, in some embodiments, the process is a form, fill and seal process and comprises the following additional steps (c) and (d). In step (c), contents are added into the pouch by the open end. In some embodiments, the contents comprise solid materials. In some embodiments, the contents comprise liquids. In some embodiments, the contents comprise both solids and liquids.

In step (d), the open end of the pouch is sealed transverse to the machine direction with heat and pressure for sufficient time to form a heat seal, similar to step (b). Then the sealed pouch is cut from the end of the tube and recovered.

The product of steps (a) and (b) is an open pouch. The product of steps (c) and (d) is a closed and filled pouch. The walls of the pouch comprise the multilayer film as previously described, with the heat seal skin layer on the inside and optionally the outer skin layer (if any) on the outside. The length and width of the pouch are as previously described.

Alternatively, a pouch may be formed from the multilayer film by (a) folding the multilayer film along so that one folded layer lies on top of the other folded layer with the heat seal skin layers of each folded layer against each other; and (b) heat sealing the folded film transverse to the fold at regular intervals to form a pouch in which the folded side forms a bottom of the pouch, the transverse heat seals form sides of the pouch, and the side opposite the fold remains at least partially open and forms an open top on the pouch. In some embodiments, the fold is parallel to the long (machine) direction of the film and the transverse heat-seals are transverse to the machine direction of the film. In some embodiments, the transverse heat seals are wide enough that the heat-sealed film may be cut transversely in the heat seals to release the pouches. In some embodiments, the fold in step (a) is a "W' fold that forms a gusset at the bottom of the pouch. In some embodiments, the bottom of the pouch is also fully or partially heat sealed.

Steps (c) and (d) in the process may be the same as the earlier process: (c) the pouch is filled though the open end; and (d) the open end is heat sealed. In some embodiments, the pouches are filled and sealed on-line in a Horizontal Form, Fill and Seal (HFFS process) before they are cut apart. In some embodiments, the pouches are recovered to filled and sealed at a later stage on a different machine. Heat sealing conditions for this process are as previously described.

The following illustrative embodiments list a few embodiments of the invention.

### Illustrative Embodiments

1. A multilayer film comprising: (a) one or more primary layers comprising at least one polyethylene layer; (b) an ethylene copolymer layer comprising an ethylene copolymer selected from the group consisting of an ethylene acrylate copolymer and an ethylene vinyl acetate copolymer; and (c) a heat seal skin layer having a melting temperature of no more than 130°C; wherein the one or more primary layers are at least 50% of the thickness of the multilayer film, based on the total thickness of the film; and the ethylene copolymer layer is directly adjected to the heat seal skin layer and is positioned between the heat seal skin layer and the one or more primary layers.
2. The multilayer film of Embodiment 1 wherein the ethylene copolymer layer comprises at least 50 weight percent ethylene acrylate copolymer, based on the total weight of the ethylene copolymer layer.
3. The multilayer film of Embodiment 2 wherein the ethylene acrylate copolymer comprises from 70 to 90 weight percent ethylene monomer and from 10 to 30 weight percent acrylate monomer selected from the group consisting of methacrylic acid or alkyl esters of acrylic acid in which the alkyl group comprises from 1 to 8 carbon atoms.
4. The multilayer film of Embodiment 2 wherein the density of the ethylene acrylate copolymer is from 0.916 g/cc to 0.950 g/cc.
5. The multilayer film of Embodiment 2 wherein the melt index (I2) of the ethylene acrylate copolymer is from 1.0 to 4.0 g/10 min.
6. The multilayer film of Embodiment 2 wherein the ethylene copolymer layer comprises from 80 to 100 weight percent of the ethylene acrylate copolymer, based on the total weight of the ethylene copolymer layer.
7. The multilayer film of Embodiment 2 wherein the ethylene copolymer layer comprises from 80 to 100 weight percent of the ethylene acrylate copolymer, based on the total weight of the ethylene copolymer layer; and the ethylene acrylate copolymer has a density from 0.916 g/cc to 0.950 g/cc, has a melt index (I₂) from 1.0 to 4.0 g/10 min, and comprises from 72 to 90 weight percent ethylene monomer and from 10 to 28 weight percent acrylate monomer selected from the group consisting of methacrylic acid and alkyl esters of acrylic acid in which the alkyl group comprises from 1 to 8 carbon atoms.
8. The multilayer film of Embodiment 1 wherein the ethylene copolymer layer comprises at least 50 weight percent ethylene vinyl acetate copolymer, based on the total weight of the ethylene copolymer layer.
9. The multilayer film of Embodiment 8 wherein the ethylene vinyl acetate copolymer comprises from 65 to 85 weight percent ethylene and from 15 to 35 weight percent vinyl acetate monomer.
10. The multilayer film of Embodiment 8 wherein the density of the ethylene vinyl acetate copolymer is from 0.930 g/cc to 0.958 g/cc, and the melt index (I2) of the ethylene vinyl acetate copolymer is from 1.5 to 5.0 g/10 min.
11. The multilayer film of Embodiment 8 wherein the ethylene copolymer layer comprises from 80 to 100 weight percent of the ethylene vinyl acetate copolymer, based on the total weight of the ethylene copolymer layer; and wherein the ethylene vinyl acetate copolymer has a density from 0.930 g/cc to 0.958 g/cc, has a melt index (I₂) from 1.5 to 5.0 g/10 min, and comprises 65 to 85 weight percent ethylene monomer and from 15 to 35 weight percent vinyl acetate monomer.
12. The multilayer film of any one of Embodiments 1 to 11 wherein the heat seal skin layer is from 10 to 20 percent of the thickness of the film, the ethylene copolymer layer is from 5 to 15 percent of the thickness of the film and the one or more primary layers are collectively 65 to 90 percent of the thickness of the film, based on the total thickness of the film.
13. The multilayer film of Embodiment 12 wherein the heat seal layer comprises at least 50 weight percent linear low density polyethylene or ethylene-based plastomer with a seal initiation temperature from 75°C to 120°C°C, based on the total weight of the heat seal layer.
14. The multilayer film of Embodiment 12 wherein the one or more primary layers comprise one or more core layers and an outer skin layer.
15. The multilayer film of Embodiment 12 wherein the film comprises from 70 weight percent to 100 weight percent polyethylene, based on the total weight of the film.
16. The multilayer film of Embodiment 12 wherein the film comprises from 90 weight percent to 100 weight percent polyethylene, and the heat seal layer comprises polyethylene.
17. The multilayer film of Embodiment 12 wherein the film has a thickness from 50 microns to 300 microns.
18. The multilayer film of Embodiment 17 wherein the film has a dart drop impact strength of at least 800 g and an Elmendorf tear strength in both the machine and transverse directions of at least 1000 g.
19. A pouch that comprises a multilayer polymer film of Embodiment 12.
20. A pouch comprising the multilayer film of Embodiment 16.

### Test Methods

Unless stated otherwise, measurements listed in this application are made using the following test methods:

| Parameter | Test |
|---|---|
| Density | ASTM D792, Method B. |
| Melt Index | ASTM D1238 at 190°C, 2.16 kg. |
| Melting Temperature (Tₘ) of Polyethylene | Measured by Differential Scanning Calorimetry. |
| Melting Temperature (Tₘ) of EVA | ASTM D3418 |
| Seal Initiation Temperature | Temperature at which 8.8N/25.4 mm seal strength is achieved (measured by ASTM F2029) using 40 psi bar pressure and 0.5 sec dwell time, such as made with a Topwave HT tester. |
| Film Thickness | ASTM D6988 |
| Layer Thickness | Cross-section microscopy. |
| Seal Strength | ASTM F88 |
| Drop Test | A pouch is filled and sealed with a specific amount of water and allowed to return to room temperature. The pouch is released with the bottom seal down from a height of 300 cm onto a concrete floor. The pouch is inspected for leaks. If no leaks are found, the drop and inspection are repeated. |
| Dart Impact | ISO 7765-1/1998 Method B Determination of impact resistance by the free falling dart method |
| Puncture Resistance | ASTM D5748-95 Standard Test Method for Protrusion Puncture Resistance of Stretch Wrap Film |
| Elmendorf Tear | ASTM D1922 Standard Test Method for Propagation Tear Resistance of Plastic Film and Thin Sheeting by Pendulum Method |
| 2% Secant Modulus | ISO 527-3 Plastics - Determination of Tensile Properties |
| Haze | ASTM D1003-11 Standard Test Method for Haze and Luminous Transmittance of Transparent Plastics |
| Gloss 45° | ASTM D2457-08 Standard Test Method for Specular Gloss of Plastic Films and Solid Plastics |
| Thickness | ASTM F2251 Standard Method to Determine the Thickness of Flexible Packaging Materials. |

### Examples

The following examples illustrate specific embodiments of the invention, but do not limit the broadest scope of the invention.

The materials in Table 1 are used for the Examples:

**Table 1**

| **Name** | **Description** |
|---|---|
| Skin 1 | ELITE^{™} 5960G1 Enhanced Polyethylene Resin. MI: 0.85 g/10 min. Density: 0.962 g/cc |
| Core 1 | INNATE ST70 Precision Packaging Resin. Ethylene-1-octene copolymer. MI: 0.85 g/10 min. Density: 0.926 g/cc |
| Core 2 | INNATE ST100 Precision Packaging Resin. Ethylene-1-octene copolymer. MI: 0.85 g/10 min. Density: 0.928 g/cc |
| Sub 1 | ELVALOY AC 3117 Acrylate Copolymer. A copolymer of ethylene with 17 wt% butyl acrylate comonomer content. MI: 1.5 g/10 min. Density: 0.924 g/cc |
| Seal 1 | Ethylene-based plastomer produced by a solution process using metallocene catalyst. MI: 1.0 g/10 min. Density: 0.904 g/cc |

The polymers and polymer blends listed in Table 2 (below) are coextruded on a Windmüller and Hölscher blown-film extrusion line to make a 9-layer film. The extrusion rate is 195 kg/hr. Die gap is 2 mm. Die diameter is 250 mm. The extrusion die temperature is from 215°C to 242°C. The blow-up ratio is 2: 1. IE 1 and IE2 are examples of the invention. CE1 - CE3 are comparative examples.

The resulting films have an average thickness of 150 microns. The films are tested for dart drop impact, puncture resistance, Elmendorf tear strength in the machine direction (MD) and transverse direction (TD), 2% scant modulus in the machine direction (MD) and transverse direction (TD), haze and 45% gloss according to the test methods. Results are shown in Table 2.

Each film is used to make water-filled pouches on an FM 060 form-fill and seal line produced by SN Maschinenbau GmbH. The pouches are 195 mm high x 220 mm wide. The bottom sealing temperature is 155°C, and the side sealing temperature is 135°C. The sealing time is 0.3 sec, and the line speed is 35 pouches/min. Each pouch is filled with 1.2 L of water.

Twenty pouches from each film sample are tested in the drop test according to the Test Methods from 300 cm. Pouches are dropped so that they land on the bottom of the pouch. Pouches that survive the first drop are redropped from the same height until most or all pouches have failed or until each pouch has been dropped about 5 times. Results are shown in Table 2. The "First Drop" results count the number of pouches that ruptured in the first drop. "Subsequent Drops" shows the aggregate number of times that surviving pouches were redropped, and the "Subsequent Failures" shows the aggregate number of failures among those drops. It is observed that the pouches usually fail by splitting along the film, rather than failing at a seam.

**Table 2**

| | IE1 | CE1 | CE2 | IE2 | CE3 |
|---|---|---|---|---|---|
| Film Composition | | | | | |
| Layer 1 (15%) (outer) | Skin 1 | Skin 1 | Skin 1 | Skin 1 | Skin 1 |
| Layer 2 (12%) | Core 1 | Core 1 | Core 1 | Core 2 | Core 2 |
| Layer 3 (18%) | Core 1 | Core 1 | Core 1 | Core 2 | Core 2 |
| Layer 4 (6%) | Core 1 | Core 1 | Core 1 | Core 2 | Core 2 |
| Layer 5 (5%) | Core 1 | Core 1 | **Sub 1** | Core 2 | Core 2 |
| Layer 6 (6%) | Core 1 | Core 1 | Core 1 | Core 2 | Core 2 |
| Layer 7 (18%) | Core 1 | Core 1 | Core 1 | Core 2 | Core 2 |
| Layer 8 (5%) | **Sub 1** | Core 1 | Core 1 | **Sub 1** | Core 2 |
| Layer 9 (15%) | Seal 1 | Seal 1 | Seal 1 | Seal 1 | Seal 1 |
| | | | | | |

| Test Results | | | | | |
|---|---|---|---|---|---|
| First Drop (Failure /20) | 0 | 2 | 2 | 0 | 6 |
| Subsequent Drops | 100 | 16 | 27 | 98 | 14 |
| Subsequent Failures | 0 | 16 | 18 | 9 | 13 |
| Dart Drop (g) | 1073 | 1051 | 1164 | >2000 | >2000 |
| Elmendorf Tear (CD) (g) | 2694 | 2758 | 4996 | 1873 | 1879 |
| Elmendorf Tear (MD) (g) | 1844 | 1946 | 3891 | 1469 | 1504 |
| Puncture Energy (J) | 6.092 | 7.666 | 6.142 | 5.801 | 5.094 |
| 2% Secant Mod - MD (MPa) | 259.5 | 270.2 | 258.8 | 297.5 | 314.0 |
| 2% Secant Mod - TD (MPa) | 312.4 | 278.4 | 281.0 | 308.9 | 320.1 |
| Haze (%) | 44.4 | 45.8 | 36.8 | 53.7 | 53.1 |
| Gloss (-) | 34.2 | 30.7 | 34.2 | 23.4 | 23.5 |

## Claims

1. A multilayer film comprising: (a) one or more primary layers comprising at least one polyethylene layer; (b) an ethylene copolymer layer comprising an ethylene copolymer selected from the group consisting of an ethylene acrylate copolymer and an ethylene vinyl acetate copolymer; and (c) a heat seal skin layer having a melting temperature of no more than 130°C; wherein the one or more primary layers are at least 50% of the thickness of the multilayer film, based on the total thickness of the film; and the ethylene copolymer layer is directly adjected to the heat seal skin layer and is positioned between the heat seal skin layer and the one or more primary layers.

2. The multilayer film of claim 1, wherein the ethylene copolymer layer comprises at least 50 weight percent ethylene acrylate copolymer, based on the total weight of the ethylene copolymer layer.

3. The multilayer film of claim 2, wherein the ethylene acrylate copolymer comprises from 70 to 90 weight percent ethylene monomer and from 10 to 30 weight percent acrylate monomer selected from the group consisting of alkyl esters of methacrylic acid and acrylic in which the alkyl group comprises from 1 to 8 carbon atoms.

4. The multilayer film of claim 2, wherein the ethylene copolymer layer comprises from 80 to 100 weight percent of the ethylene acrylate copolymer, based on the total weight of the ethylene copolymer layer.

5. The multilayer film of claim 2, wherein the ethylene copolymer layer comprises from 80 to 100 weight percent of the ethylene acrylate copolymer, based on the total weight of the ethylene copolymer layer; and the ethylene acrylate copolymer has a density from 0.916 g/cc to 0.950 g/cc, has a melt index (I₂) from 1.0 to 4.0 g/10 min, and comprises from 72 to 90 weight percent ethylene monomer and from 10 to 28 weight percent acrylate monomer selected from the group consisting of alkyl esters of methacrylic acid and acrylic acid in which the alkyl group comprises from 1 to 8 carbon atoms.

6. The multilayer film of claim 1, wherein the ethylene copolymer layer comprises at least 50 weight percent ethylene vinyl acetate copolymer, based on the total weight of the ethylene copolymer layer.

7. The multilayer film of claim 6, wherein the ethylene copolymer layer comprises from 80 to 100 weight percent of the ethylene vinyl acetate copolymer, based on the total weight of the ethylene copolymer layer; and wherein the ethylene vinyl acetate copolymer has a density from 0.930 g/cc to 0.958 g/cc, has a melt index (I₂) from 1.5 to 5.0 g/10 min, and comprises 65 to 85 weight percent ethylene monomer and from 15 to 35 weight percent vinyl acetate monomer.

8. The multilayer film of any one of claims 1 to 7, wherein the heat seal skin layer is from 10 to 20 percent of the thickness of the film, the ethylene copolymer layer is from 5 to 15 percent of the thickness of the film and the one or more primary layers are 65 to 90 percent of the thickness of the film, based on the total thickness of the film.

9. The multilayer film of claim 8, wherein the heat seal layer comprises at least 50 weight percent linear low density polyethylene or ethylene-based plastomer having a seal initiation temperature from 75°C to 120°C, based on the total weight of the heat seal layer.

10. The multilayer film of claim 8, wherein the one or more primary layers comprise one or more core layers and an outer skin layer.

11. The multilayer film of claim 8, wherein the film comprises from 70 weight percent to 100 weight percent polyethylene, based on the total weight of the film.

12. The multilayer film of claim 8, wherein the film comprises from 90 weight percent to 100 weight percent polyethylene, and the heat seal layer comprises polyethylene.

13. The multilayer film of claim 8, wherein the film has a thickness from 50 microns to 300 microns.

14. The multilayer film of claim 13, wherein the film has a dart drop impact strength of at least 800 g and an Elmendorf tear strength in both the machine and transverse directions of at least 1000 g.

15. A pouch comprising the multilayer film of claim 8.
